# EUROPÄISCHE PATENTSCHRIFT

(11) **EP 3 111 168 B1**
(45) Veröffentlichungstag und Bekanntmachung des Hinweises auf die Patenterteilung: **11.04.2018**
(21) Anmeldenummer: 15707875.9
(22) Anmeldetag: 25.02.2015
(51) Int. Cl.: G01C 21/20, G05D 1/02

(54) **VERFAHREN UND EIN SYSTEM ZUM LOKALISIEREN EINER MOBILEN EINRICHTUNG**
METHOD AND SYSTEM FOR LOCATING A MOBILE DEVICE
PROCÉDÉ ET SYSTÈME DE LOCALISATION D'UN DISPOSITIF MOBILE

(30) Priorität: 26.02.2014 DE 102014002821
(43) Veröffentlichungstag der Anmeldung: 04.01.2017
(73) Patentinhaber: Audi AG, 85045 Ingolstadt (DE)
(72) Erfinder: SCHULLER, Florian, 85737 Ismaning (DE); ALTINGER, Harald, 85049 Gerolfing (DE)
(74) Vertreter: Bauer, Dominik Michael
(86) Internationale Anmeldenummer: PCT/EP2015/000435
(87) Internationale Veröffentlichungsnummer: WO 2015/128085

(56) Entgegenhaltungen:
- THORPE C ET AL: "Annotated maps for autonomous land vehicles", PROCEEDINGS OF THE INTERNATIONAL CONFERENCE ON SYSTEMS, MAN, AND CYBERNETICS. LOS ANGELES, NOV. 4 - 7, 1990; [PROCEEDINGS OF THE INTERNATIONAL CONFERENCE ON SYSTEMS, MAN, AND CYBERNETICS], NEW YORK, IEEE, US, Bd. -, 4. November 1990 (1990-11-04), Seiten 282-288, XP010038000, DOI: 10.1109/ICSMC.1990.142111 ISBN: 978-0-87942-597-5

## Beschreibung

Die Erfindung betrifft ein Verfahren und ein System zum Lokalisieren einer mobilen Einrichtung.

Zum Bestimmen einer Position eines Kraftfahrzeugs kann eine Vorgehensweise, wie z. B. SLAM (Simultaneous Localization And Mapping; http://de.wikipedia.org/wiki/Simultaneous_Localization_and_Mapping) oder MCL (Monte Carlo Localization, http://en.wikipedia.org/wiki/Monte_Carlo_localization) verwendet werden. Dabei wird in jeder Situation dieselbe Vorgehensweise eingesetzt. Zum Erzeugen einer Hypothese für die zu bestimmende Position können mehrere Sensoren verwendet werden, wobei Daten dieser Sensoren fusioniert werden. Beide genannten Vorgehensweisen sind in dem Buch "Probabilistic Robotics (Intelligent Robotics and Autonomous Agents)" von Thrun, Burgard und Fox (ISBN: 9780262201629) beschrieben.

Ein Verfahren zum Schätzen einer Stellung eines beweglichen Roboters unter Nutzung eines Partikelfilters ist aus der Druckschrift EP 1 923 763 A1 bekannt. Hierbei werden mögliche Fehler eines Sensors des Roboters unter Berücksichtigung eines Partikelstroms korrigiert.

Ein aus der Druckschrift EP 1 901 152 B1 bekanntes Bewegungssystem ist dazu ausgebildet, zur Lokalisierung und Kartierung eine Partikelfiltereinheit zu benutzen. Dabei werden mit der Partikelfiltereinheit Posen aktueller Partikel bestimmt. Außerdem wird mit einem Sensor eine Posenvariante in einer Pose eines mobilen Elements erfasst.

Die Druckschrift WO 2011/033100 A1 beschreibt ein Verfahren zur Erstellung einer Karte bezüglich ortsbezogener Angaben über die Wahrscheinlichkeit einer zukünftigen Bewegung einer Person in einem räumlichen Umfeld.

Dokument THORPE C ET AL, "Annotated maps for autonomous land vehicles", PROCEEDINGS OF THE INTERNATIONAL CONFERENCE ON SYSTEMS, MAN, AND CYBERNETICS. LOS ANGELES, NOV. 4- 7, 1990, Seiten 282-288, XP010038000, ISBN: 978-0-87942-597-5, offenbart kommentierte Karten für autonome Landfahrzeuge. Dabei weist ein mobiler Roboter Wahrnehmungsmodule wie einen 3D-Laserscanner zur Landmarkenerkennung auf. Ein Trigger sendet zur Aktivierung eine Nachricht an ein bestimmtes Modul.

Vor diesem Hintergrund werden ein Verfahren sowie ein System mit den Merkmalen der unabhängigen Patentansprüche vorgestellt. Ausgestaltungen des vorgesehenen Verfahrens und Systems ergeben sich aus den abhängigen Patentansprüchen und der Beschreibung.

Das erfindungsgemäße Verfahren ist zum Lokalisieren einer mobilen Einrichtung in einer Umgebung vorgesehen. Die Einrichtung weist mehrere Sensoren zum Erfassen der Umgebung der Einrichtung unter Nutzung unterschiedlicher Lokalisierungsmethoden auf, wobei für die Umgebung eine Referenzkarte, die mehrere Positionen innerhalb der Umgebung umfasst, vorliegt und verwendet wird. Dabei wird für mindestens eine Position, in der Regel für jede Position, die die Einrichtung innerhalb der Umgebung und/oder laut der Referenzkarte einnehmen kann, mindestens eine Lokalisierungsmethode, die mit mindestens einem Sensor zum Erfassen der Umgebung durchzuführen ist, empfohlen, wobei für eine aktuelle Position der mobilen Einrichtung zum Lokalisieren der Einrichtung die mindestens eine laut der Referenzkarte empfohlene Lokalisierungsmethode, die mit mindestens einem Sensor durchzuführen ist, verwendet wird, wobei die mindestens eine Lokalisierungsmethode unter Berücksichtigung einer Perspektive des mindestens einen Sensors, die dieser für eine Position der mobilen Einrichtung innerhalb der Umgebung einnimmt, ermittelt wird. In der Regel wird für jede Position, die in der Referenzkarte verzeichnet ist, genau eine Lokalisierungsmethode, die mit einem Sensor durchgeführt werden kann, empfohlen. Allerdings ist es auch möglich, dass für eine Position mehr als, eine Lokalisierungsmethode, die mit jeweils mindestens einem Sensor durchführbar ist, empfohlen wird. Dies kann bspw. dadurch bedingt sein, dass jeder Sensor eine andere Detektionsrichtung aufweist. Somit können für eine Position richtungsabhängig verschiedene Lokalisierungsmethoden durchgeführt werden.

Jeder Sensor wird durch Landmarken in der Umgebung unterschiedlich beeinflusst. So kann für manche Positionen bekannt sein, dass ein Sensor Fehlmessungen liefert. Diese können vermieden werden, wenn dieser Sensor in bestimmten Regionen deaktiviert wird. Es ist auch möglich, Daten eines Sensors, der für bestimmte Positionen Fehlmessungen liefert, bei einer Verarbeitung, üblicherweise Fusion der Daten, wobei Daten mehrerer Sensoren berücksichtigt werden, bei der Fusion geringer zu werten.

Außerdem wird für eine zukünftige Bewegung, bspw. eine Fahrt, der Einrichtung eine abzufahrende Trajektorie innerhalb der Umgebung geplant und für Positionen der Einrichtung entlang der Trajektorie jeweils die mindestens eine laut der Referenzkarte empfohlene Lokalisierungsmethode, d. h. eine Lokalisierungsmethode oder mehrere Lokalisierungsmethoden, die mit mindestens einem Sensor durchzuführen ist bzw. sind, verwendet. Auf diese Weise kann die Umgebung durch frühzeitige Wahl der mindestens einen Lokalisierungsmethode vorausschauend erfasst werden.

Erfindungsgemäß wird die mindestens eine Lokalisierungsmethode unter Berücksichtigung einer Perspektive des mindestens einen Sensors, die dieser für eine Position der mobilen Einrichtung innerhalb der Umgebung einnimmt, ermittelt. Zusätzlich kann die Lokalisierungsmethode unter Berücksichtigung der Reichweite und eventueller Fehlmessungen des Sensors ermittelt werden.

Die Perspektive des mindestens einen Sensors wird in Abhängigkeit einer Position des Sensors sowie in Abhängigkeit einer Detektionsrichtung des Sensors ausgehend von dessen Position ermittelt. Dabei sind die aktuelle Position, eine aktuelle Perspektive und eine aktuelle Detektionsrichtung des Sensors Betriebsparameter dieses Sensors.

Als weitere Betriebsparameter des Sensors wird dessen Reichweite bzw. Detektionsreichweite berücksichtigt. Falls bekannt ist, dass der Sensor an einer Position in der Umgebung situationsabhängig eine Fehlmessung durchführt, kann dessen Reichweite angepasst, in der Regel verkürzt werden.

Weitere Betriebsparameter für Sensoren, die als Kameras ausgebildet sind, sind die Helligkeit, eine Blendeneinstellung usw. Diese können nun für jede Position vorab eingestellt werden, wenn eine Information dazu in der Referenzkarte hinterlegt ist.

Die Umgebung kann in der Referenzkarte in verschiedene Regionen bzw. Abschnitte und/oder Sektoren aufgeteilt werden. Für Positionen, die innerhalb einer üblicherweise zusammenhängenden Region liegen, kann dieselbe mindestens eine Lokalisierungsmethode mit demselben mindestens einen Sensor durchgeführt werden. Hierbei kann auch die Trajektorie in unterschiedliche Abschnitte unterteilt werden, wobei jeder Abschnitt durch eine der Regionen führt.

Eine aktuelle Position der Einrichtung wird in Ausgestaltung über ein Positionierungssystem (GPS) ermittelt, wenn die Einrichtung von dem Positionierungssystem Daten empfangen kann.

Eine Lokalisierung der Einrichtung kann auch innerhalb eines Gebäudes, bspw. innerhalb eines Parkhauses, durchgeführt werden. Je nach Empfang können hier auch Informationen des Positionierungssystems berücksichtigt werden. So ist innerhalb des Gebäudes eine initiale Schätzung der Position möglich. Außerhalb des Gebäudes können von der Einrichtung unbeeinträchtigt Informationen des Positionierungssystems empfangen werden.

In Ausgestaltung wird die mindestens eine Lokalisierungsmethode für eine Position unter Berücksichtigung einer, bspw. von dem Sensor aus einsehbaren, Verteilung von Landmarken in der Umgebung bestimmt. Dabei kann die mindestens eine Lokalisierungsmethode für eine Position unter Berücksichtigung einer Dichte von Landmarken in der Umgebung und/oder unter Berücksichtigung eines Abstands der Position zu den Landmarken in der Umgebung bestimmt werden. Als Landmarken können hier unterschiedliche, ortsfeste Objekte verwendet werden, bspw. Bäume, Gebäude oder Verkehrszeichen. Eventuell können Landmarken auch als Barcodes, bspw. zweidimensionale Barcodes, oder Säulen innerhalb eines Gebäudes ausgebildet sein.

Die mindestens eine Lokalisierungsmethode für eine Position kann über eine Reichweite als Betriebsparameter des mindestens einen Sensors eingestellt werden. Weitere zu berücksichtigende und/oder einzustellende Betriebsparameter können eine Empfindlichkeit, ein Öffnungswinkel und eine Messfrequenz des Sensors sein.

Die Referenzkarte wird in Ausgestaltung anhand von Referenzmessungen bestimmt. Hierzu wird die Einrichtung in der Umgebung angeordnet. Zur Durchführung einer Referenzmessung an einer Position werden sämtliche Lokalisierungsmethoden mit sämtlichen Sensoren durchgeführt und dabei getestet. Daraus wird mindestens eine für die Position geeignete Lokalisierungsmethode, die mit mindestens einem Sensor durchzuführen ist, ermittelt und für diese Position in der Referenzkarte vermerkt. Da sich die Umgebung verändern kann, können beliebig oft Referenzmessungen durchgeführt werden, bei denen die Referenzkarte aktualisiert wird.

Das Verfahren kann für eine mobile Einrichtung, die als Kraftfahrzeug ausgebildet ist, durchgeführt werden.

Das System zum Lokalisieren einer mobilen Einrichtung in einer Umgebung weist mehrere Sensoren zum Erfassen der Umgebung der Einrichtung unter Nutzung unterschiedlicher Lokalisierungsmethoden auf. Dabei liegt für die Umgebung eine Referenzkarte vor, die mehrere Positionen innerhalb der Umgebung umfasst, wobei für mindestens eine Position, die in der Referenzkarte verzeichnet ist, in der Regel für jede Position, die üblicherweise durch die mobile Einrichtung zu erreichen ist, mindestens eine Lokalisierungsmethode, die mit mindestens einem der mehreren Sensoren zum Erfassen der Umgebung durchzuführen ist, zu empfehlen ist. Für eine aktuelle Position der mobilen Einrichtung ist zum Lokalisieren der Einrichtung die mindestens eine in der Referenzkarte vermerkte und laut der Referenzkarte empfohlene Lokalisierungsmethode, die mit mindestens einem der mehreren Sensoren durchzuführen ist, zu verwenden.

Außerdem weist das System ein Steuergerät auf, das dazu ausgebildet ist, die aktuelle Position der mobilen Einrichtung durch Austausch von Informationen mit einem externen Positionierungssystem zu ermitteln und den mindestens einen Sensor zum Durchführen der mindestens einen Lokalisierungsmethode anzusteuern. Dabei werden Daten zu der aktuellen Position einer Antenne des Systems von dem Positionierungssystem über elektromagnetische Wellen bereitgestellt.

Bei einer Durchführung des Verfahrens wird in Ausgestaltung ein positionsabhängiger Ansatz zur Lokalisierung eines Kraftfahrzeugs als mobile Einrichtung verwendet, der auf Daten der Referenzkarte der Umgebung, in der sich das Kraftfahrzeug befindet, und einer für das Kraftfahrzeug geplanten, abzufahrenden Trajektorie basiert. Durch Ergänzung der Daten der Referenzkarte und der Trajektorie mit Referenzmessungen wird vorherbestimmt, welches sensorunterstützte Lokalisierungsverfahren bzw. Positionierungsverfahren in welcher Region der Gegend und/oder entlang von welchem Abschnitt der Trajektorie anzuwenden ist.

Ein von einem Sensor durchzuführendes Detektionsverfahren zum Erfassen der Umgebung wird positionsabhängig gezielt ausgewählt und parametrisiert. Daraus ergibt sich u. a., dass Positionsfehler, die aus bekannten, ggf. fehlerhaften Messungen eines verwendeten Sensors resultieren, vermieden werden können. Durch Reduktion von fehlerhaften oder uneindeutigen Messungen kann eine robustere Hypothese für eine zu berechnende Position des Kraftfahrzeugs bereitgestellt werden. Falls auf eine Lokalisierungsmethode bzw. auf ein Detektionsverfahren verzichtet werden kann, kann ein hierfür zu verwendender Sensor deaktiviert werden, wodurch Energie, die zum Betreiben dieses Sensors erforderlich ist, eingespart werden kann. Weiterhin kann eine Rechenleistung eines Steuergeräts, mit dem die Lokalisierungsmethode ansonsten durchzuführen ist, reduziert werden, wodurch ebenfalls Energie eingespart werden kann.

Zur Durchführung des Verfahrens können als Landmarken Infrastruktureinrichtungen unverändert und somit ohne bauliche Anpassung verwendet werden. Sämtliche Daten, die zum Bestimmen der Position und/oder zum Bestimmen einer Hypothese für die Position verwendet werden, können durch mindestens eine Referenzmessung in einer für das Kraftfahrzeug vorgesehenen Umgebung mit einem als Referenzsensor ausgebildeten Sensor ermittelt werden. Somit wird im Rahmen des Verfahrens ein für die jeweilige Umgebung, in der sich das Kraftfahrzeug befindet, geeigneter Sensor zum Erfassen von Objekten in der Umgebung abhängig von seiner Reichweite eingesetzt, wodurch eine Lokalisierung des Kraftfahrzeugs sowie eine Hypothese zu dessen Position durchgeführt wird.

Bei dem Verfahren zum Lokalisieren der mobilen Einrichtung, die den mindestens einen Sensor zum Erfassen einer Umgebung der Einrichtung unter Nutzung unterschiedlicher Lokalisierungsmethoden aufweisen kann, wird für eine Fahrt der Einrichtung eine abzufahrende Trajektorie geplant. Dabei wird die geplante Trajektorie in Regionen bzw. Abschnitte unterteilt, wobei jeder Abschnitt von der jeweiligen Umgebung abhängig ist. Hierbei wird für jeden Abschnitt eine an die Umgebung angepasste Lokalisierungsmethode verwendet, die für jede Position innerhalb des Abschnitts empfohlen wird. Somit wird jeweils eine Lokalisierungsmethode umgebungs- und/oder situationsabhängig eingesetzt, wobei es sich bspw. um Lokalisierungsmethoden wie Hector SLAM oder UKF (Unscented Kalman Filter) handeln kann. Derartige Lokalisierungsmethoden gehen aus SLAM, die eine Gruppe von Lokalisierungsmethoden umfasst, oder MCL, einer mathematischen Methode zur Lokalisierung, hervor.

Somit kann eine an die jeweilige Umgebung angepasste Lokalisierungsmethode, die mit einem Sensor durchführbar ist, ausgewählt werden. Da jeweils eine Lokalisierungsmethode von mehreren zur Verfügung stehenden Lokalisierungsmethoden, die jeweils mit mindestens einem hierzu vorgesehenen Sensor durchführbar sind, ausgewählt wird, kann auf die anderen Lokalisierungsmethoden in einem aktuellen Abschnitt der Umgebung der Einrichtung verzichtet werden. Somit kann ein Sensor, der in einer Umgebung fehlerhafte Messungen liefern würde, deaktiviert werden. Außerdem können Messschwellwerte, bspw. für eine Empfindlichkeit, eine Messfrequenz für eine Anzahl an sensorisch durchzuführenden Messungen, eine Maximaldistanz bzw. eine Erfassungsreichweite und/oder eine Feuerstrategie, mit der eine Richtung zum Erfassen der Umgebung und somit die jeweilige Detektionseinrichtung des Sensors bestimmt wird, als Betriebsparameter eines Sensors angepasst werden.

Als Betriebsparameter kann auch eine Sensorvorverarbeitung, z. B. ein Rauschschwellen bei einem Ultraschallsensor oder ein Weissbildabgleich bei einer Kamera als Sensor, angepasst bzw. parametrisiert werden.

Welche Lokalisierungsmethode mit welchem Sensor durchzuführen ist, ist in der Referenzkarte angegeben. Dabei können durch Auswahl der Lokalisierungsmethode auch Betriebsparameter des zu verwendenden Sensors automatisch festgelegt werden. Allerdings ist es auch möglich, Werte für Betriebsparameter des Sensors an die Umgebung anzupassen. Zusätzlich kann eine Lokalisierungsmethode auch dadurch ausgewählt werden, aus welcher Richtung die Umgebung von einem Sensor zu erfassen ist. Demnach ist es möglich, dass für eine Position entlang der Trajektorie in einer ersten Richtung eine erste Lokalisierungsmethode mit einem ersten Sensor und in eine andere Richtung eine zweite Lokalisierungsmethode mit einem zweiten Sensor durchzuführen ist. Die Referenzkarte wird durch die mindestens eine Referenzmessung bei einer Referenzfahrt bereitgestellt, wobei eine Zuordnung einer konkreten Umgebung zu einer konkreten Lokalisierungsmethode ermittelt wird, wobei auch eine aktuelle Perspektive und Detektionseinrichtung eines Sensors innerhalb der Umgebung berücksichtigt werden können.

Das System kann mindestens einen als Ultraschallsensor ausgebildeten Sensor aufweisen. Es können auch Lasersensoren sowie Kameras eingesetzt werden. Allerdings ist ein derartiger Ultraschallsensor für Bodenreflexionen anfällig, d. h. der vom Ultraschallsensor ausgesandte Schall wird am Boden der Umgebung reflektiert, wodurch wiederum für ein in der Umgebung zu erfassendes Objekt ein falscher Abstand zu diesem Objekt geliefert wird. Unter Berücksichtigung dessen kann für eine bestimmte Position innerhalb der Umgebung durch Auswahl einer Lokalisierungsmethode u. a. eine Reichweite des Ultraschallsensors eingestellt sowie angepasst werden. Alternativ oder ergänzend kann eine Wahrscheinlichkeit für einen Messfehler des Ultraschallsensors durch Wahl einer Lokalisierungsmethode verringert werden. In Ausgestaltung kann der Ultraschallsensor in einer bestimmten Umgebung und/oder an einer bestimmten Position abgeschaltet werden. Stattdessen wird ein anderer Sensor des Systems unter Nutzung einer alternativen Lokalisierungsmethode verwendet.

Eine erste Schätzung einer Position der Einrichtung entlang der abzufahrenden Trajektorie wird in der Regel durch ein Navigationssystem, das durch ein Positionierungssystem, wie bspw. GPS, unterstützt wird, durchgeführt, wobei die mobile Einrichtung unter Nutzung des Positionierungssystems lokalisiert wird. Eine über das Positionierungssystem zu bestimmende Lokalisierung für die mobile Einrichtung kann bis auf wenige Meter genau sein. Im Rahmen des Verfahrens kann eine Genauigkeit für die Lokalisierung verbessert werden.

Das Verfahren kann bspw. für eine als Kraftfahrzeug ausgebildete Einrichtung durchgeführt werden. Hierbei wird berücksichtigt, dass ein bspw. als Laserscanner ausgebildeter Sensor, der an dem Kraftfahrzeug angeordnet ist, für den Fall, dass sich das Kraftfahrzeug in einer geraden, flachen Ebene befindet, eine erste, ebene Perspektive einnimmt. Dagegen nimmt der Sensor für den Fall, dass das Kraftfahrzeug auf einer geneigten Steigung oder Rampe fährt, eine zweite, geneigte Perspektive ein. Demnach ist eine einzusetzende Lokalisierungsmethode u. a. in Abhängigkeit eines Winkels einer Detektionsrichtung, den das Kraftfahrzeug relativ zu einer zu definierenden Bezugsebene einnimmt, auszuwählen. Zum Umschalten zwischen zwei Lokalisierungsmethoden ist zu berücksichtigen, an welcher Position innerhalb der Umgebung sich der Winkel, den das Kraftfahrzeug relativ zu der Bezugsebene einnimmt, ändert. Eine derartige Position kann auch als Knickstelle bezeichnet werden. Von dem Winkel, den das Kraftfahrzeug einnimmt, hängt auch die Perspektive des Sensors ab. Die Position für die Änderung des Winkels, wobei auf eine Änderung der Lokalisierungsmethode hingewiesen werden kann, ist in der Referenzkarte abgelegt bzw. gespeichert.

Bei einer Durchführung des Verfahrens kann eine Lokalisierungsmethode deaktiviert werden, wenn durch die Lokalisierungsmethode an einer aktuellen Position und/oder in einem Abschnitt der Umgebung ansonsten positionsbedingt fehlerhafte Daten oder keine Daten bereitgestellt werden. Durch ein Abschalten eines Sensors und/oder durch Deaktivierung einer Lokalisierungsmethode kann eine Rechenlast des Steuergeräts des Systems reduziert werden. Dies betrifft bspw. kamerabasierte Lokalisierungsverfahren unter Nutzung von Kameras als Sensoren, für die eine hohe Rechenlast aufzuwenden ist. Ist jedoch bekannt, dass in einem bestimmten Abschnitt der Umgebung keine Merkmale, üblicherweise Objekte, vorhanden sind, anhand derer eine Position der Einrichtung mittels der kamerabasierten Lokalisierungsmethode bestimmt werden kann, kann diese Lokalisierungsmethode abgeschaltet werden und eine dadurch frei gewordene Rechenkapazität des Steuergeräts für andere Prozesse verwendet werden, wodurch eine elektrische Leistungsaufnahme des Steuergeräts zu drosseln und somit Energie einzusparen ist. Üblicherweise kann ein Sensor positionierungsabhängig in einen Ruhemodus bzw. Schlafmodus versetzt werden, so dass der Sensor nur noch wenig Energie benötigt. Ein Sensor kann in bestimmten Positionen der Umgebung auch vollständig deaktiviert werden.

Alternativ oder ergänzend kann eine Umgebung durch ein Vorhandensein von Merkmalen, d. h. von Landmarken und somit von Objekten, in der Umgebung definiert sein. Falls diese Merkmale und/oder Objekte innerhalb der Umgebung durch ihr möglicherweise normiertes Aussehen eingestuft und/oder klassifiziert werden können, kann eine sog. markerbasierte Lokalisierungsmethode eingesetzt werden. Merkmale und/oder Objekte mit einem normierten Aussehen sind u. a. Fahrbahnmarkierungen, Schilder und/oder zweidimensionale Barcodes. Kann festgestellt werden, dass in einem Abschnitt der Umgebung keine oder nur unzureichende Landmarken vorhanden sind, ist eine darauf basierende Lokalisierungsmethode nicht anwendbar.

Eine mögliche Lokalisierungsmethode kann demnach auch abhängig davon gewählt werden, wie weit Landmarken bzw. Objekte in einem Abschnitt der Umgebung maximal von einem Sensor, mit dem die Lokalisierungsmethode durchgeführt wird, entfernt sind, so dass die Landmarken von diesem Sensor erfasst werden können. Somit kann für einen Abschnitt der Umgebung, in dem die Landmarken von dem Sensor weit entfernt sind, eine Lokalisierungsmethode mit einem Sensor für ein große Reichweite und in einem Abschnitt der Umgebung, in dem sich die Landmarken in der Nähe des Sensors befinden, eine Lokalisierungsmethode mit einer geringen Reichweite des Sensors verwendet werden. Ist somit für eine Umgebung bekannt, dass Landmarken zu weit entfernt sind, um Messungen mit einem bestimmten Sensor unter Nutzung bestimmter Lokalisierungsmethoden zu ermöglichen, kann der hierzu einzusetzende Sensor deaktiviert werden. So beträgt eine Reichweite eines Ultraschallsensors nur wenige Meter, bspw. 4 m. Falls jedoch zu detektierende Landmarken zu weit entfernt sind, liefert der Ultraschallsensor keine Messdaten und kann deaktiviert werden.

Die Referenzkarte, die für einen bestimmten Abschnitt der Umgebung bei einer Referenzmessung ermittelt werden kann, kann als sog. zweidimensionale Gridkarte (Occupancy Grid), als Vektorkarte, Multilayer oder Baumkarte ausgebildet sein. Informationen hierzu gehen aus dem eingangs erwähnten Buch "Probalistic Robotics" hervor. In einer derartigen Referenzkarte sind Regionen, d. h. Sektoren und/oder Abschnitte, in der Umgebung definiert, wobei in der Referenzkarte als Metainformationen ausgebildete Informationen hinterlegt sind, die über eine positionsabhängig zu verwendende Lokalisierungsmethode Auskunft geben. Somit sind diese Metainformationen sensorabhängig und umfassen Einträge darüber, welche Lokalisierungsmethode zur Anwendung kommen kann, wie groß eine minimale Reichweite eines zu verwendenden Sensors sein sollte und/oder wie groß ein maximaler Abstand des Sensors zu ggf. vorhandenen Wänden als Landmarken sein sollte. Die Metainformationen können auch Einträge von Beleuchtungsverhältnissen und/oder eine Art von vorhandenen Landmarken umfassen. Basierend auf der aktuellen Position der mobilen Einrichtung, in der Regel eines Kraftfahrzeugs oder eines autonomen Roboters, wird festgestellt, in welchem Sektor der Umgebung und/oder Referenzkarte sich diese befindet. Die Metadaten aus der Referenzkarte werden positions- und/oder sektorabhängig ausgelesen sowie zu verwendende Sensoren und/oder Lokalisierungsmethoden parametrisiert.

Weitere Vorteile und Ausgestaltungen der Erfindung ergeben sich aus der Beschreibung und der beiliegenden Zeichnung.

Die voranstehend genannten und die nachstehend noch zu erläuternden Merkmale sind nicht nur in der jeweils angegebenen Kombination, sondern auch in anderen Kombinationen oder in Alleinstellung verwendbar, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt in schematischer Darstellung eine mobile Einrichtung, die eine Ausführungsform eines erfindungsgemäßen Systems aufweist, bei Durchführung einer Ausführungsform des erfindungsgemäßen Verfahrens.
Figur 2 zeigt ein Diagramm zur Durchführung der Ausführungsform des erfindungsgemäßen Verfahrens.

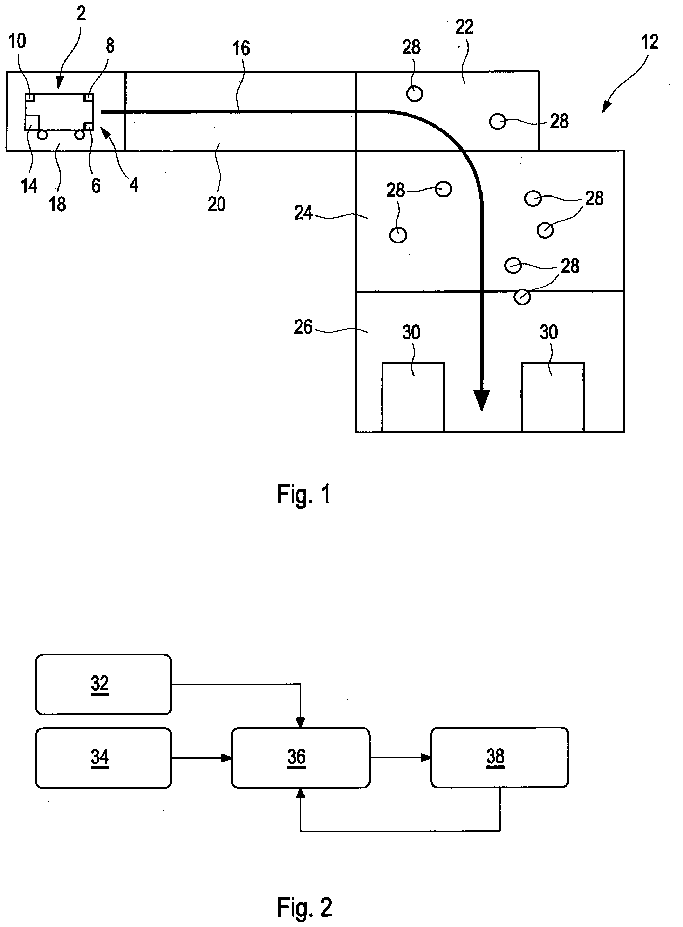

Figur 1 zeigt in schematischer Darstellung eine als Kraftfahrzeug ausgebildete mobile Einrichtung 2, die die Ausführungsform des erfindungsgemäßen Systems 4 umfasst. Dabei umfasst das System 4 mehrere Sensoren 6, 8, 10, von denen in Figur 1 jedoch nur drei Stück dargestellt sind. Jeder dieser Sensoren 6, 8, 10 ist zum Erfassen einer Umgebung 12 und somit eines Umfelds der mobilen Einrichtung 2 ausgebildet, wobei von jedem Sensor 6, 8, 10 mindestens eine Lokalisierungsmethode zum Erfassen der Umgebung 12 verwendet wird. Außerdem umfasst das System 4 ein Steuergerät 14 zum Steuern von mindestens einem Schritt einer Ausführungsform des erfindungsgemäßen Verfahrens.

Bei Durchführung der Ausführungsform des Verfahrens ist hier vorgesehen, dass sich die Einrichtung 2 innerhalb der Umgebung 12 entlang einer Trajektorie bewegt, die in Figur 1 durch eine Kurve 16 angedeutet ist. Diese Trajektorie verläuft durch fünf Regionen 18, 20, 22, 24, 26 bzw. Abschnitte oder Sektoren der Umgebung 12.

In dem Steuergerät 14 des Systems 4 ist eine Referenzkarte abgelegt. Diese Referenzkarte wird durch Referenzmessungen für Positionen, die die mobile Einrichtung 2 innerhalb der Umgebung 12 einnehmen kann, ermittelt. Dabei wird für jeweils eine Position eine Referenzmessung durchgeführt, wobei in der jeweiligen Position mit jedem der Sensoren 6, 8, 10 jede mit dem Sensor 6, 8, 10 durchführbare Lokalisierungsmethode durchgeführt wird. Hierbei wird für jede dieser Positionen mindestens eine Lokalisierungsmethode, die mit mindestens einem Sensor 6, 8, 10 durchzuführen und mit der die Umgebung 12 gut zu erfassen ist, ermittelt und in der Referenzkarte vermerkt. Dabei ist es möglich, die Referenzkarte durch neu durchzuführende Referenzmessungen zu ergänzen und/oder zu aktualisieren.

Welche mindestens eine Lokalisierungsmethode mit welchem mindestens einen Sensor 6, 8, 10 für welche Position in der Umgebung 12 laut der Referenzkarte zu empfehlen ist, hängt hier von einer Verteilung von Landmarken 28, 30 innerhalb der Umgebung 12 ab. Bei diesen Landmarken 28, 30 handelt es sich um ortsfest angeordnete Objekte unterschiedlicher Größe, die in der Umgebung 12 unterschiedlich dicht verteilt sind. Einige Landmarken 30 sind hier als Hindernisse eingestuft. Die Umgebung 12 ist hier über die Referenzkarte in die fünf Regionen 18, 20, 22, 24, 26 aufgeteilt, wobei laut der Referenzkarte für jede Region 18, 20, 22, 24, 26, die jeweils eine Vielzahl an Positionen umfasst, jeweils mindestens eine Lokalisierungsmethode, die mit jeweils mindestens einem Sensor 6, 8, 10 durchzuführen ist, empfohlen wird.

Zur weiteren Beschreibung der Ausführungsform des Verfahrens wird auch auf das Diagramm aus Figur 2 verwiesen. Bei der Fahrt, die für die mobile Einrichtung 2 entlang der Trajektorie geplant ist, wird für die mobile Einrichtung 2 über ein Positionierungssystem, bspw. GPS, eine Ermittlung 32 einer aktuellen und/oder initialen Position durchgeführt, wobei die Position üblicherweise geschätzt wird.

Die Referenzkarte kann für eine jeweilige Umgebung, unabhängig davon, ob die Umgebung innerhalb oder außerhalb eines Gebäudes angeordnet ist, von einer Datenbank in das Steuergerät 14 des Systems 4 geladen und zur Durchführung des Verfahrens genutzt werden. Zudem wird für die Referenzkarte eine positionsabhängige Analyse 34 durchgeführt. In Abhängigkeit der aktuellen Position wird für diese unter Berücksichtigung der Referenzkarte eine positionsbasierte Auswahl 36 darüber getroffen, welche Lokalisierungsmethode mit welchem Sensor 6, 8, 10 durchzuführen ist, wobei hier für jede Region 18, 20, 22, 24, 26 eine bestimmte Lokalisierungsmethode, die mit einem bestimmten Sensor 6, 8, 10 durchzuführen ist, empfohlen wird.

Hierbei wird in Ausgestaltung überprüft, in welcher Region 18, 20, 22, 24, 26 sich die aktuelle Position der mobilen Einrichtung 2 innerhalb der Umgebung 12 befindet, wobei die bestimmte Lokalisierungsmethode mit dem bestimmten Sensor 6, 8, 10 regionenabhängig ausgewählt wird. In einem abschließenden Schritt wird die Lokalisierung 38 der mobilen Einrichtung 2 unter Nutzung der bestimmten Lokalisierungsmethode mit dem bestimmten Sensor 6, 8, 10 durchgeführt. Dabei können Ergebnisse dieser Lokalisierung 38 auch für eine weitere Referenzmessung und somit zum Aktualisieren der Referenzkarte verwendet werden. Somit kann auch eine erneute Auswahl 36 aktualisiert und bei einer erneuten Lokalisierung 38 positionsabhängig eine weitere bestimmte Lokalisierungsmethode unter Nutzung von einem weiteren bestimmten Sensor 6, 8, 10 durchgeführt werden.

## Patentansprüche

1. Verfahren zum Lokalisieren einer mobilen Einrichtung (2) in einer Umgebung (12), wobei die Einrichtung (2) mehrere Sensoren (6, 8, 10) zum Erfassen der Umgebung (12) der Einrichtung (2) unter Nutzung unterschiedlicher Lokalisierungsmethoden aufweist, wobei für die Umgebung (12) eine Referenzkarte vorliegt, die mehrere Positionen innerhalb der Umgebung (12) umfasst, wobei für mindestens eine Position innerhalb der Umgebung (12) mindestens eine Lokalisierungsmethode, die mit mindestens einem Sensor (6, 8, 10) zum Erfassen der Umgebung (12) durchzuführen ist, empfohlen wird, wobei für eine aktuelle Position der mobilen Einrichtung (2) zum Lokalisieren der Einrichtung (2) die mindestens eine laut der Referenzkarte empfohlene Lokalisierungsmethode, die mit mindestens einem Sensor (6, 8, 10) durchzuführen ist, verwendet wird, **dadurch gekennzeichnet, dass** die mindestens eine Lokalisierungsmethode unter Berücksichtigung einer Perspektive des mindestens einen Sensors (6, 8, 10), die dieser für eine Position der mobilen Einrichtung (2) innerhalb der Umgebung (12) einnimmt, ermittelt wird.

2. Verfahren nach Anspruch 1, bei dem für eine Bewegung der Einrichtung (2) eine Trajektorie innerhalb der Umgebung (12) geplant und für Positionen der Einrichtung (2) entlang der Trajektorie jeweils die mindestens eine laut der Referenzkarte empfohlene Lokalisierungsmethode, die mit mindestens einem Sensor durchzuführen ist, verwendet wird.

3. Verfahren nach Anspruch 1 oder 2, bei dem die Perspektive des mindestens einen Sensors (6, 8, 10) in Abhängigkeit einer Position des Sensors (6, 8, 10) sowie in Abhängigkeit einer Detektionsrichtung des Sensors (6, 8, 10) ausgehend von dessen Position ermittelt wird.

4. Verfahren nach einem der voranstehenden Ansprüche, bei dem die Umgebung in der Referenzkarte in Regionen (18, 20, 22, 24, 26) aufgeteilt wird, wobei für Positionen innerhalb einer Region (18, 20, 22, 24, 26) dieselbe mindestens eine Lokalisierungsmethode mit demselben mindestens einen Sensor (6, 8, 10) durchgeführt wird.

5. Verfahren nach einem der voranstehenden Ansprüche, bei dem eine aktuelle Position der Einrichtung (2) über ein Positionierungssystem ermittelt wird.

6. Verfahren nach einem der voranstehenden Ansprüche, bei dem die mindestens eine Lokalisierungsmethode für eine Position unter Berücksichtigung einer Verteilung von Landmarken (28, 30) in der Umgebung (12) bestimmt wird.

7. Verfahren nach Anspruch 6, bei dem die mindestens eine Lokalisierungsmethode für eine Position unter Berücksichtigung einer Dichte der Landmarken (28, 30) in der Umgebung (12) bestimmt wird.

8. Verfahren nach Anspruch 6 oder 7, bei dem die mindestens eine Lokalisierungsmethode für eine Position unter Berücksichtigung eines Abstands der Position zu den Landmarken (28, 30) in der Umgebung (12) bestimmt wird.

9. Verfahren nach einem der voranstehenden Ansprüche, bei dem über die mindestens eine Lokalisierungsmethode für eine Position eine Reichweite des mindestens einen Sensors (6, 8, 10) eingestellt wird.

10. Verfahren nach einem der voranstehenden Ansprüche, bei dem die Referenzkarte anhand von Referenzmessungen bestimmt wird.

11. Verfahren nach Anspruch 10, bei dem zur Durchführung einer Referenzmessung an einer Position sämtliche Lokalisierungsmethoden mit sämtlichen Sensoren (6, 8, 10) durchgeführt werden, wobei daraus mindestens eine für die Position geeignete Lokalisierungsmethode, die mit mindestens einem Sensor (6, 8, 10) durchzuführen ist, ermittelt und für diese Position in der Referenzkarte vermerkt wird.

12. Verfahren nach Anspruch 10 oder 11, bei dem die Referenzkarte aktualisiert wird.

13. Verfahren nach einem der voranstehenden Ansprüche, das für eine mobile Einrichtung (2), die als Kraftfahrzeug ausgebildet ist, durchgeführt wird.

14. System (4) zum Lokalisieren einer mobilen Einrichtung (2) in einer Umgebung (12), das mehrere Sensoren (6, 8, 10) zum Erfassen der Umgebung der Einrichtung (2) unter Nutzung unterschiedlicher Lokalisierungsmethoden sowie ein Steuergerät (14) zur Durchführung der Schritte eines Verfahrens nach einem der vorhergehenden Ansprüche aufweist.

15. System nach Anspruch 14, wobei das Steuergerät (14) ferner dazu ausgebildet ist, die aktuelle Position der mobilen Einrichtung (2) durch Austausch von Informationen mit einem Positionierungssystem zu ermitteln und den mindestens einen Sensor (6, 8, 10) zum Durchführen der mindestens einen Lokalisierungsmethode anzusteuern.

## Claims

1. Method for locating a mobile device (2) in an environment (12), whereby the device (2) has a plurality of sensors (6, 8, 10) for scanning the environment (12) of the device (2) using different locating methods, whereby a reference map exists for the environment (12), said reference map comprising a plurality of positions within the environment (12), whereby for at least one position within the environment (12) at least one locating method, to be performed with at least one sensor (6, 8, 10) for scanning the environment (12), is recommended, whereby for a current position of the mobile device (2) for locating the device (2) the at least one locating method recommended according to the reference map, to be performed with at least one sensor (6, 8, 10), is used, **characterised in that** the at least one locating method is determined with due regard to a perspective of the at least one sensor (6, 8, 10) that said sensor adopts for a position of the mobile device (2) within the environment (12).

2. Method according to claim 1, in which, for a movement of the device (2), a trajectory within the environment (12) is planned and in each case the at least one locating method recommended according to the reference map, to be performed with at least one sensor, is used for positions of the device (2) along the trajectory.

3. Method according to claim 1 or 2, in which the perspective of the at least one sensor (6, 8, 10) is determined as a function of a position of the sensor (6, 8, 10) and also as a function of a detection direction of the sensor (6, 8, 10) starting out from its position.

4. Method according to any one of the preceding claims, in which the environment is divided up into regions (18, 20, 22, 24, 26) in the reference map, whereby the same at least one locating method is performed with the same at least one sensor (6, 8, 10) for positions within a region (18, 20, 22, 24, 26).

5. Method according to any one of the preceding claims, in which a current position of the device (2) is determined by way of a positioning system.

6. Method according to any one of the preceding claims, in which the at least one locating method for a position is identified with due regard to a distribution of landmarks (28, 30) in the environment (12).

7. Method according to claim 6, in which the at least one locating method for a position is identified with due regard to a density of the landmarks (28, 30) in the environment (12).

8. Method according to claim 6 or 7, in which the at least one locating method for a position is identified with due regard to a distance of the position in relation to the landmarks (28, 30) in the environment (12).

9. Method according to any one of the preceding claims, in which a range of the at least one sensor (6, 8, 10) is set by way of the at least one locating method for a position.

10. Method according to any one of the preceding claims, in which the reference map is identified on the basis of reference measurements.

11. Method according to claim 10, in which, for the performing of a reference measurement at a position, all locating methods are performed with all sensors (6, 8, 10) whereby at least one locating method suitable for the position, to be performed with at least one sensor (6, 8, 10), is thus determined and noted in the reference map for this position.

12. Method according to claim 10 or 11, in which the reference map is updated.

13. Method according to any one of the preceding claims, which is performed for a mobile device (2) that is designed as motor vehicle.

14. System (4) for locating a mobile device (2) in an environment (12), said system having a plurality of sensors (6, 8, 10) for scanning the environment of the device (2) using different locating methods and also having a controller (14) for performing the steps of a method according to any one of the preceding claims.

15. System according to claim 14, whereby the controller (14) is designed furthermore to determine the current position of the mobile device (2) through an exchange of information with a positioning system and to control the at least one sensor (6, 8, 10) for performing the at least one locating method.

## Revendications

1. Procédé de localisation d'un dispositif mobile (2) dans un environnement (12), dans lequel le dispositif (2) présente plusieurs capteurs (6, 8, 10) pour la saisie de l'environnement (12) du dispositif (2) en utilisant différentes méthodes de localisation, dans lequel, pour l'environnement (12), une carte de référence qui comprend plusieurs positions à l'intérieur de l'environnement (12) est présente, dans lequel, pour au moins une position à l'intérieur de l'environnement (12), au moins une méthode de localisation, qui doit être exécutée avec au moins un capteur (6, 8, 10) pour la saisie de l'environnement (12), est recommandée, dans lequel, pour une position actuelle du dispositif mobile (2), l'au moins une méthode de localisation, recommandée selon la carte de référence, qui doit être exécutée avec au moins un capteur (6, 8, 10), est utilisée pour la localisation du dispositif (2), **caractérisé en ce que** l'au moins une méthode de localisation est déterminée en tenant compte d'une perspective de l'au moins un capteur (6, 8, 10) que celui-ci adopte pour une position du dispositif mobile (2) à l'intérieur de l'environnement (12).

2. Procédé selon la revendication 1, où, pour un mouvement du dispositif (2), une trajectoire à l'intérieur de l'environnement (12) est planifiée et, pour chacune des positions du dispositif (2) le long de la trajectoire, l'au moins une méthode de localisation, recommandée selon la carte de référence, qui doit être exécutée avec au moins un capteur, est utilisée.

3. Procédé selon la revendication 1 ou 2, où la perspective de l'au moins un capteur (6, 8, 10) est déterminée en fonction d'une position du capteur (6, 8, 10) ainsi qu'en fonction d'une direction de détection du capteur (6, 8, 10) en partant de sa position.

4. Procédé selon l'une quelconque des revendications précédentes, où l'environnement est divisé dans la carte de référence en des régions (18, 20, 22, 24, 26), dans lequel, pour des positions à l'intérieur d'une région (18, 20, 22, 24, 26), la même au moins une méthode de localisation est exécutée avec le même au moins un capteur (6, 8,10).

5. Procédé selon l'une quelconque des revendications précédentes, où une position actuelle du dispositif (2) est déterminée par le biais d'un système de positionnement.

6. Procédé selon l'une quelconque des revendications précédentes, où l'au moins une méthode de localisation est définie pour une position en tenant compte d'une répartition de points de repère (28, 30) dans l'environnement (12).

7. Procédé selon la revendication 6, où l'au moins une méthode de localisation est définie pour une position en tenant compte d'une densité des points de repère (28, 30) dans l'environnement (12).

8. Procédé selon la revendication 6 ou 7, où l'au moins une méthode de localisation est définie pour une position en tenant compte d'une distance de la position aux points de repère (28, 30) dans l'environnement (12).

9. Procédé selon l'une quelconque des revendications précédentes, où une portée de l'au moins un capteur (6, 8, 10) est réglée pour une position par le biais de l'au moins une méthode de localisation.

10. Procédé selon l'une quelconque des revendications précédentes, où la carte de référence est définie à l'aide de mesures de référence.

11. Procédé selon la revendication 10, où, pour l'exécution d'une mesure de référence à une position, toutes les méthodes de localisation sont exécutées avec tous les capteurs (6, 8, 10), dans lequel il en résulte qu'au moins une méthode de localisation, appropriée pour la position, qui doit être exécutée avec au moins un capteur (6, 8, 10), est déterminée et est notée pour cette position dans la carte de référence.

12. Procédé selon la revendication 10 ou 11, où la carte de référence est actualisée.

13. Procédé selon l'une quelconque des revendications précédentes, qui est exécuté pour un dispositif mobile (2) qui est conçu en tant que véhicule automobile.

14. Système (4) de localisation d'un dispositif mobile (2) dans un environnement (12), qui présente plusieurs capteurs (6, 8, 10) pour la saisie de l'environnement du dispositif (2) en utilisant différentes méthodes de localisation ainsi qu'un appareil de commande (14) pour l'exécution des étapes d'un procédé selon l'une quelconque des revendications précédentes.

15. Système selon la revendication 14, dans lequel l'appareil de commande (14) est en outre conçu pour déterminer la position actuelle du dispositif mobile (2) en échangeant des informations avec un système de positionnement et pour amener l'au moins un capteur (6, 8, 10) à exécuter l'au moins une méthode de localisation.
